Europäisches Patentamt

(19) European Patent Office

Office européen des brevets

(11) Veröffentlichungsnummer: **0 004 615**

**A1**

(12) # EUROPÄISCHE PATENTANMELDUNG

(21) Anmeldenummer: 79100890.7

(22) Anmeldetag: 23.03.79

(51) Int. Cl.²: **G 01 N 21/00**
G 01 B 11/00, C 23 F 1/00
C 25 F 3/00

(30) Priorität: 10.04.78 DE 2815373

(43) Veröffentlichungstag der Anmeldung:
17.10.79 Patentblatt 79/21

(84) Benannte Vertragsstaaten:
BE FR IT LU NL

(71) Anmelder: SIEMENS AKTIENGESELLSCHAFT Berlin
und München
Postfach 261
D-8000 München 22(DE)

(72) Erfinder: Glashauser, Walter
Paul-Klee-Strasse 4
D-8000 München 70(DE)

(72) Erfinder: Michel, Hans-Jürgen, Dr.
Isartalstrasse 81a
D-8000 München 70(DE)

(54) **Verfahren und Vorrichtung zum Prüfen von hochpräzisen Formätzteilen.**

(57) Für die Überwachung der Produktion von Formätzteilen
werden in jeder Folie oder jedem Blech (1) repräsentative
Durchbrechungen in Form von Sieben vorgesehen. Diese
Siebflächen werden durch Schattenprojektion oder optische
Abbildung auf lichtempflindlichen Empfängern (7) abgebildet und ausgemessen. Das dabei entstehende Signal ist ein
Maß für die transparente Fläche der Siebe, aus der dann die
kritischen Maße der Formätzteile abgeleitet werden.

EP 0 004 615 A1

0004615

SIEMENS AKTIENGESELLSCHAFT    Unser Zeichen

Berlin und München    VPA 78 P 7 0 3 7

Verfahren und Vorrichtung zum Prüfen von hochpräzisen Formätzteilen.

Die Erfindung betrifft ein Verfahren zum vollautomatischen Messen hochpräziser Formätzteile für die laufende Überwachung der Fertigungsqualität, das heißt der Formtoleranzen und insbesondere der kritischen Strukturen.

Um eine gleichbleibende Qualität von hochpräzisen Formätzteilen zu gewährleisten und plötzlich auftretende Fertigungsstörungen sicher zu erfassen, müssen die Formätzteile durch Messen der Strukturen, insbesondere der kritischen Strukturen, revidiert werden. Dies geschieht in der Regel mit Hilfe eines Mikroskops, besonders bei kritischen Strukturen der Größenordnung von 10 /um. Dabei wird das zu messende Teil auf dem Koordinatentisch des Mikroskops gelegt. Durch Bedienen von Handtrieben zur sorgfältigen Positionierung werden die einzelnen Meßpositionen angefahren und mit Hilfe einer Meßanordnung die jeweilige Struktur gemessen und der Meßwert weiterverarbeitet.

Wed 1 Plr / 6.4.1978

Diese Arbeitsgänge erfordern geschultes Meßpersonal, sind sehr ermüdend und schwanken außerdem durch subjektiven Einfluß des Meßpersonals.

Ein weiterer Nachteil dieses Meßverfahrens besteht darin, daß ein schnelles Eingreifen in den Fertigungsablauf nicht möglich ist, da der Zeitraum zwischen Ätzen und Revision zu groß ist.

Der Erfindung liegt die Aufgabe zugrunde, die Beurteilung der Fertigungsqualität zu automatisieren. Diese Aufgabe wird dadurch gelöst, daß in die Folien oder Bleche zusätzlich zu den Strukturen repräsentative Durchbrechungen, z. B. feine Siebflächen, eingeätzt werden, daß die Transparenz dieser Siebflächen gemessen und von dem Ergebnis auf die Größe der kritischen Strukturen geschlossen wird. Durch die Verwendung von repräsentativen Durchbrechungen in Form von Siebflächen ist es möglich, den Meßablauf vollautomatisch durchzuführen. Mit steigender Anzahl der gemessenen Siebe erhält man eine präzisere Aussage über die kritischen Strukturen. Mit Hilfe der ermittelten Meßwerte kann dann schnell steuernd in den Fertigungsprozeß eingegriffen werden. Hinsichtlich der Geschwindigkeit und Objektivität wird die Beurteilung der Fertigungsqualität damit ferner von Personeneinflüssen befreit.

Nach einer Weiterbildung der Erfindung werden die Siebflächen durch Schattenprojektion auf Fotoelemente abgebildet und das Empfängersignal als Maß für die transparente Fläche ausgewertet. Aus dem Empfängersignal, z. B. dem Kurzschlußstrom der Fotoelemente, der linear mit der beleuchteten Fläche zunimmt, kann dann die kritische Struktur des zu prüfenden Formätzteiles ermittelt werden. Es ist erforderlich, den Zusammenhang zwischen dem kritischen Maß der transparenten Fläche der Siebe einmal festzustellen, um die interessierenden Strukturgrößen ermitteln zu können.

Nach einer weiteren Ausgestaltung der Erfindung wird für
jede Folie oder Blech die Transparenz als Quotient aus
dem gemessenen Kurzschlußstrom der Fotoelemente bei durch
die Siebflächen fallendem Licht und dem Strom ermittelt,
der sich ergibt, wenn lediglich eine Blende im Lichtstrahlengang liegt. Auf diese Weise ist es möglich, vor
jeder neuen Messung den Eichpunkt jeder einzelnen Fotozelle zu überprüfen. Die Vorrichtung wird zweckmäßigerweise so ausgelegt, daß durch die Quotientenbildung die
Anlage bei jedem Wechsel des Prüflings automatisch geeicht wird.

Eine Vorrichtung zur Durchführung des Verfahrens nach der
Erfindung besteht vorzugsweise darin, daß die zu messende
Folie auf einer Ansaugplatte gegen eine Abdeckplatte gedrückt wird, über der sich eine Aufnahmeplatte mit den
Fotoelementen befindet, und daß die Folie im Lichtstrahlengang zwischen der Ansaugplatte und der Abdeckplatte liegt.
Auf diese Weise ist eine einfache Positionierung der
Folien zu erreichen. Dadurch, daß die Siebe größer sind
als die Ausschnittsblenden, ist eine exakte Positionierung
der zu messenden Teile nicht notwendig.

0004615

4    VPA    78 P 7 0 37

Zwischen der Aufnahmeplatte und der Abdeckplatte ist nach einer weiteren Ausgestaltung der Erfindung eine Eich- und Begrenzungsblende vorgesehen. Mit der Eich- und Begrenzungsblende, die über den Sieben liegt, werden die zu messenden Siebflächen begrenzt und die Größen der jeweiligen 100 %-Eichwerte bestimmt.

Nach einer weiteren Ausgestaltung sind die Siebflächen möglichst gleichmäßig auf der Folie verteilt, um die Wirkungen von Prozeßschwankungen innerhalb der zu untersuchenden Fläche zu erfassen.

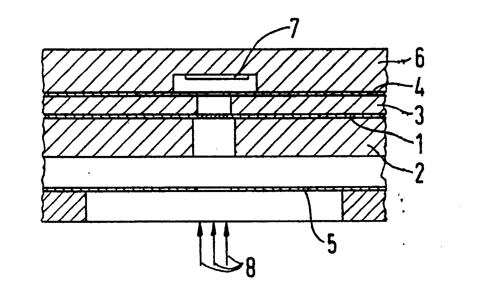

Die Erfindung wird anhand eines Ausführungsbeispiels in der Figur erläutert, die ein Meßgerät in der Vorderansicht im Schnitt zeigt.

Die zu messende Folie 1 ist auf einem Folienaufnehmer 2 angesaugt, mit dem sie gegen eine Abdeckplatte 3 gedrückt wird. Dadurch liegt sie im parallelen Strahlengang 8 zwischen der Ansaugplatte des Folienaufnehmers und der Abdeckplatte. Eine eingebaute Eich- und Begrenzungsblende 4, die über der Abdeckplatte liegt, begrenzt die zu messenden Siebflächen. Unter dem Folienaufnehmer ist eine weitere Blende 5 und über der Eich- und Begrenzungsblende eine Aufnahmeplatte 6 vorgesehen, in der die Fotoelemente 7 angeordnet sind.

Ein durch die Eichblende begrenzter Siebausschnitt in den zu messenden Folien wird durch Schattenprojektion auf die Fotoelemente 7 projiziert. Der Kurzschlußstrom der Fotoelemente, der linear mit der Beleuchtungsstärke zunimmt, ist dann in Verbindung mit dem Kurzschlußstrom der gesamten beleuchteten Fläche ein Maß für die transparente Fläche der Siebe.

Die Lage der Fotoelemente wurde so gewählt, daß sie mit der Empfängerfläche nach unten angeordnet sind, um eine Beeinträchtigung der Meßwerte durch mögliche Ablagerungen von Staub oder Schmutz zu vermeiden.

Um möglichst vergleichbare Ätzbedingungen für die Struktur und für die Transparenzsiebe zu erreichen, wird vorzugsweise ein Sieb verwendet, das sich aus längeren Rechtecken zusammensetzt, wobei die Richtung der Rechtecke parallel zur Kanalrichtung verläuft.

Zur Automatisierung der Meßwertverarbeitung wird die Meßanlage vorzugsweise mit einem Rechner gekoppelt.

6 Patentansprüche
1 Figur

1 VPA 78 P 7 0 3 7

0004615

<u>Patentansprüche.</u>

1. Verfahren zum vollautomatischen Messen hochpräziser Formätzteile für die laufende Überwachung der Fertigungsqualität, das heißt der Formtoleranzen und insbesondere der kritischen Strukturen, d a d u r c h  g e k e n n - z e i c h n e t , daß in die Folien (1) oder Bleche zusätzlich zu den Strukturen repräsentative Durchbrechungen, z. B. feine Siebflächen, eingeätzt werden, daß die Transparenz dieser Siebflächen gemessen und von dem Ergebnis auf die Größe der kritischen Strukturen geschlossen wird.

2. Verfahren nach Anspruch 1, d a d u r c h  g e - k e n n z e i c h n e t , daß die Siebflächen durch Schattenprojektion auf Fotoelemente (7) abgebildet und das Empfängersignal als Maß für die transparente Fläche ausgewertet wird.

3. Verfahren nach Anspruch 2, d a d u r c h  g e - k e n n z e i c h n e t , daß für jede Folie (1) oder Blech die Transparenz als Quotient aus dem gemessenen Kurzschlußstrom der Fotoelemente bei durch die Siebflächen fallendem Licht und dem Strom ermittelt wird, der sich ergibt, wenn lediglich eine Blende (5) im Lichtstrahlengang (8) liegt.

4. Vorrichtung zur Durchführung des Verfahrens nach Anspruch 2, d a d u r c h  g e k e n n z e i c h n e t , daß die zu messende Folie (1) auf einer Ansaugplatte (2) gegen eine Abdeckplatte (3) gedrückt wird, über der sich eine Aufnahmeplatte (6) mit Fotoelementen (7) befindet und daß die Folie im Lichtstrahlengang (8) zwischen der Ansaugplatte (2) und der Abdeckplatte (3) liegt.

5. Vorrichtung nach Anspruch 4, **d a d u r c h   g e - k e n n z e i c h n e t ,** daß zwischen der Aufnahme- platte (2) und der Abdeckplatte (3) eine Eich- und Begrenzungsblende (4) und unter dem Folienaufnehmer eine weitere Blende (5) vorgesehen ist.

6. Vorrichtung nach Anspruch 4, **d a d u r c h   g e - k e n n z e i c h n e t ,** daß die Siebflächen möglichst gleichmäßig auf der Folie (1) verteilt sind.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 669 771 (M.L. LERNER)<br>* Ansprüche 1 und 5; Spalte 5,<br>Zeilen 5 bis 27 *<br><br>-- | 1-3 |
| | US - A - 3 663 724 (R.C. BENTON et al.)<br>* Zusammenfassung und Spalte 5,<br>Zeilen 4 bis 21 *<br><br>-- | 1,2 |
| | IBM Technical Disclosure Bulletin,<br>Band 13, Nr. 1, Juni 1970<br>New York<br>C.M. AEBI et al. "Control of etching<br>time"<br>Seite 68<br>* ganzes Dokument *<br><br>-- | 1,2 |
| A | DE - A - 2 152 943 (INTERNATIONAL<br>BUSINESS MACHINES)<br>* ganzes Dokument *<br><br>-- | |
| A | US - A - 3 503 817 (K.J. RADIMER)<br>* ganzes Dokument *<br><br>-- ./.. | |

**KLASSIFIKATION DER ANMELDUNG (Int.Cl.²)**

G 01 N 21/00
G 01 B 11/00
C 23 F 1/00
C 25 F 3/00

**RECHERCHIERTE SACHGEBIETE (Int. Cl.²)**

C 23 F 1/00
C 25 F 3/00
G 01 B 11/00
G 01 N 21/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
liegende Theorien oder
Grundsätze
E: kollidierende Anmeldung
D: in der Anmeldung angeführtes
Dokument
L: aus andern Grunden
angeführtes Dokument
&: Mitglied der gleichen Patentfamilie, übereinstimmendes
Dokument

| X | Der vorliegende Recherchenbericht wurde für alle Patentansprüche erstellt. |
|---|---|

| Recherchenort<br>Berlin | Abschlußdatum der Recherche<br>05-07-1979 | Prüfer<br>SCHWARTZ |
|---|---|---|

EPA form 1503.1 06.78

**Europäisches Patentamt**

**EUROPÄISCHER RECHERCHENBERICHT**

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| A | US - A - 3 419 446 (R.C. BENTON) <br> * Ansprüche 2 und 3; Fig. 6 bis 9 * <br> -- | | |
| A | IBM Technical Disclosure Bulletin, <br> Band 17, Nr. 7; Dezember 1974 <br> New York <br> R.S. DHALIWAL et al. "Multiple sensor, <br> end-point etch detect system" <br> Seite 1946 bis 1947 <br> * ganzes Dokument * <br> ---- | | |

RECHERCHIERTE SACHGEBIETE (Int. Cl.³)

EPA Form 1503.2   06.78